Europäisches Patentamt

(19) European Patent Office

Office européen des brevets

(11) Numéro de publication: **0 129 453**
**B1**

(12) **FASCICULE DE BREVET EUROPÉEN**

(45) Date de publication du fascicule du brevet:
02.09.87

(51) Int. Cl.⁴: **H 01 B 13/00,** H 01 B 11/18,
H 01 P 11/00

(21) Numéro de dépôt: **84400964.7**

(22) Date de dépôt: **11.05.84**

(54) **Procédé de fabrication d'une ligne coaxiale à grande résistance thermique.**

(30) Priorité: **20.05.83 FR 8308422**

(43) Date de publication de la demande:
**27.12.84 Bulletin 84/52**

(45) Mention de la délivrance du brevet:
**02.09.87 Bulletin 87/36**

(84) Etats contractants désignés:
**DE GB**

(56) Documents cité:
**EP-A-0 018 885**
**EP-A-0 091 352**
**FR-A-2 298 198**
**FR-A-2 376 502**
**US-A-3 940 718**

(73) Titulaire: **ALCATEL THOMSON FAISCEAUX HERTZIENS, 55, rue Greffulhe, F-92300 Levallois-Perret Cédex (FR)**

(72) Inventeur: **Moutet, Philippe, c/o THOMSON- CSF SCPI 173 bld Haussmann, F-75379 Paris Cédex 08 (FR)**
Inventeur: **Beau, Christian, c/o THOMSON- CSF SCPI 173 bld Haussmann, F-75379 Paris Cédex 08 (FR)**
Inventeur: **Ormières, André, c/o THOMSON- CSF SCPI 173 bld Haussmann, F-75379 Paris Cédex 08 (FR)**
Inventeur: **Gueuret, Raymond, c/o THOMSON- CSF SCPI 173 bld Haussmann, F-75379 Paris Cédex 08 (FR)**
Inventeur: **Cuvier, Pierre, c/o THOMSON- CSF SCPI 173 bld Haussmann, F-75379 Paris Cédex 08 (FR)**

(74) Mandataire: **Weinmiller, Jürgen, Lennéstrasse 9 Postfach 24, D-8133 Feldafing (DE)**

## Description

La présente invention concerne un procédé de fabrication d'une ligne coaxiale à grande résistance thermique.

Elle s'applique plus particulièrement à la réalisation de l'isolation thermique d'une ligne coaxiale reliant un aérien à un amplificateur paramétrique.

On sait en effet qu'un amplificateur paramétrique qui fonctionne dans une enceinte à basse température stabilisée de l'ordre de -20°C, doit être isolé thermiquement du milieu extérieur pour amplifier avec un minimum de bruit thermique les signaux radioélectriques appliqués à son entrée.

Pour obtenir une bonne isolation, il est par conséquent nécessaire d'isoler aussi thermiquement les lignes coaxiales reliant l'amplificateur au dispositif extérieur auquel il est connecté.

Ce problème est partiellement résolu par l'utilisation de lignes coaxiales entourées de matière isolante thermiquement dont le conducteur extérieur présente une faible section et est usiné dans de l'acier inoxydable.

Cette solution présente les inconvénients d'être onéreuse et de ne pas garantir une isolation thermique parfaite, car les procédés d'usinage de l'acier inoxydable actuellement connus ne permettent pas de réaliser des sections de conducteurs faibles nécessaires à l'obtention de forte résistances thermiques.

Le but de l'invention est de pallier les inconvénients précités. Le document EP-A- 0 018 885 décrit un procédé de fabrication par électroformage de cavités hyperfréquences dans lequel on dépose successivement, sur un noyau, dont la surface externe reproduit la surface interne de la cavité à réaliser et dans lequel sont creusés des trous correspondant aux pièces intégrantes à réaliser dans la cavité, une sous-couche d'adhérence, une sous-couche conductrice en haute-fréquence et une couche de cuivre, on dégage alors le noyau par extraction ou par dissolution.

Le document FR-A- 2 298 198 décrit un procédé de fabrication de structures en guide d'ondes dans lequel on revêt un mandrin, dont la section correspond à la section intérieure désirée pour le guide d'onde, d'un métal puis on dépose un matériau constituant le corps du guide, on enlève alors le mandrin, le corps tubulaire obtenu est alors muni à chacune de ses extrémités de brides d'accouplement.

L'invention a pour objet, un procédé de fabrication d'une ligne coaxiale constituée par deux conducteurs cylindriques, dont l'un est extérieur à l'autre, centrés sur le même axe longitudinal et séparés par un espace rempli d'une substance diélectrique, dans lequel pour fabriquer le conducteur extérieur de la ligne, on réalise un noyau par électroformage d'un matériau en alliage léger dont les dimensions extérieures correspondent à peu près aux dimensions internes de la ligne coaxiale à réaliser, on dépose par voie électrolytique et successivement sur la surface externe du noyau électroformé une fine couche de laiton puis une fine couche d'argent, pour former une couche métallique, on dissout le noyau électroformé et la couche de laiton de la couche métallique de manière à faire apparaître la couche d'argent, caractérisé en ce qu' avant de dissoudre le noyau on engage chaque extrémité du noyau dans une bride d'extrémité, en rendant solidaire chaque bride du noyau par un dépôt électrolytique d'une fine couche de cuivre au-dessus de la couche d'argent, on enrobe d'une matière plastique le noyau recouvert par la couche de cuivre dans l'espace compris entre la couche de cuivre et les brides et en ce que pour maintenir le conducteur intérieur dans l'axe longitudinal du conducteur extérieur, on fixe les extrémités du conducteur intérieur sur les brides d'extrémités par l'intermédiaire de deux rondelles isolantes logées à l'intérieur d' évidements des brides d'extrémités.

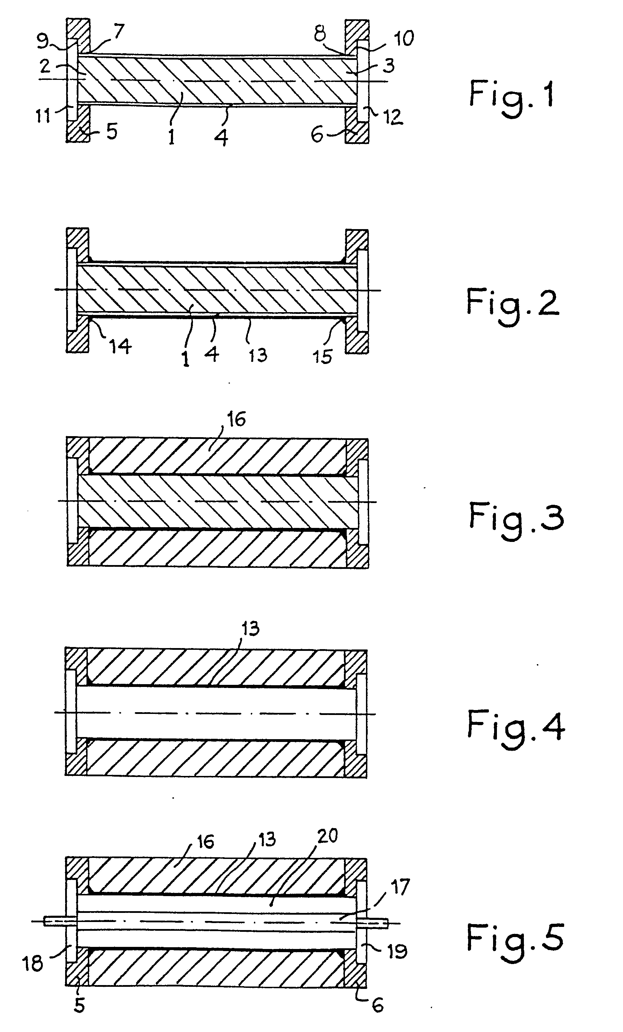

D'autres caractéristiques et avantages de l'invention apparaîtront au cours de la description faite au regard des dessins annexés donnés uniquement à titre d'exemple et dont les figures 1 à 5 illustrent les différentes étapes du procédé selon l'invention.

Le noyau obtenu par électroformage, utilisé pour la réalisation du procédé selon l'invention, est représenté en 1 à la figure 1, il est formé par un corps allongé cylindrique, en alliage léger du type AU4G renfermant 4 % de cuivre et 1 % de magnésium et comprend deux extrémités référencées respectivement 2 et 3. La première étape du procédé représentée à la figure 1 consiste à déposer par voie électrolytique une couche métallique 4 constituée par une première couche mince de laiton suivie par une deuxième couche mince d'argent. Le dépôt de la couche de laiton pourra être effectué après avoir au préalable constitué sur le noyau 1 une couche d'adhérence de zinc, obtenue, par exemple, par immersion du noyau 1 dans un bain à 25° centigrade de soude OHNa à 450 gr. par litre, d'oxyde de zinc ZnO à 50 gr. par litre et de chlorure de fer à 1 gr. par litre.

Le dépôt du laiton pourra être obtenu en utilisant un électrolyte composé de cyanure de cuivre CNCu à 52 gr. par litre, de cyanure de zink CNZn à 12 gr. par litre, de cyanure de sodium CN Na à 85 gr. par litre, de carbonate de sodium $CO_3Na_2$ à 30 gr. par litre, de chlorure d'ammoniaque $NH_4Cl$ à 28 gr. par litre et de cyanure libre à 5 gr. par litre.

Lorsque le dépôt de la couche de laiton est terminé, le dépôt de la couche d'argent est alors effectué, en utilisant un électrolyte à 20° C constitue par exemple par un sel d'argent $Ag(CN)_2K$ à 55 gr. par litre, du cyanure de potassium CNK à 125 gr. par litre, et de carbonate de potassium à 20 gr. par litre. Le dépôt de la couche d'argent pourra être effectué sur une épaisseur quelconque compatible avec la propagation de l'onde électromagnétique transportee par la ligne.

Lorsque le dépôt électrolytique de la couche 4 est terminé, la fin de la première etape, consiste à positionner aux extrémités 2 et 3 du noyau 1 des brides 5 et 6 formant à la fois éléments de fixation des prises de connexions, non représentees sur les figures, des extrémités de la ligne coaxiale et éléments de support du conducteur intérieur de la ligne. Les brides 5 et 6 sont constituées chacune par une plaque percée d'un trou, notées respectivement 7, 8 dans lequel s'engage partiellement une extrémité (2, 3) du noyau 1.

Chacune des parties des trous 7, 8 non occupée par le noyau est évidée sous la forme d'un lamage, respectivement 9, 10, destiné à recevoir, lors du montage du câble coaxial, une rondelle support du conducteur central de la ligne.

La deuxième étape du procédé, représentée à la figure 2, consiste à effectuer un dépôt électrolytique d'une couche de cuivre au-dessus de la couche d'argent précédemment obtenue, en procédant éventuellement à un renfort (14) du dépôt de cuivre dans les régions où les brides 5, 6 sont maintenues sur le noyau 1.

La troisième étape du procédé représentée à la figure 3 consiste à réaliser un surmoulage d'une matière plastique 16 en polyuréthane, polyéthylène, polyfluoréthylène résine epoxy ou tout autre matériau équivalent autour de la couche de cuivre précédemment obtenue dans l'espace compris entre les deux brides 5 et 6.

La quatrième etape du procédé consiste à dissoudre le noyau électroformé et la première couche de laiton déposée au cours de la première étape, dans un bain de soude OHNA à 100 gr. par litre à 70°C ou dans un mélange d'acide nitrique $HNO_3$ à 25 % et d'acide sulfurique $H_2SO_4$ à 75 %, encore appelé "bain de blanc", afin de faire apparaître la couche d'argent.

La cinquième étape du procédé représentée à la figure 5 consiste à fixer les extrémités du conducteur intérieur 17 de la ligne coaxiale sur les brides d'extrémités 5 et 6 par l'intermédiaire de deux rondelles isolantes 18 et 19, en polyuréthane ou tout autre matériau équivalent, respectivement logées dans les évidements ou lamage 9 et 10 précédemment usinés au cours de la première étape du procédé.

La ligne coaxiale obtenue par le procede qui vient d'être décrit est représentée à la figure 5, elle est constituée par les conducteurs concentriques 13 et 17, séparés par un espace 20 renfermant le milieu diélectrique de la ligne qui dans l'exemple de la figure 5 pourra être de l'air. Le conducteur extérieur a une épaisseur inférieure à 40 microns et est constitue par la couche de cuivre 13 obtenue précédemment, recouverte intérieurement par la couche d'argent qui reste de la couche métallique 4 déposée au cours de la première étape. La ligne comprend également l'enveloppe en matière plastique 16 qui recouvre le conducteur extérieur 13 sur toute sa surface comprise entre les deux brides d'extrémités 5 et 6 placées aux extrémités de la ligne coaxiale ainsi réalisée.

Les dimensions à donner au diamètre d du conducteur intérieur et au diamètre D du conducteur extérieur seront déterminées pour chaque cas d'utilisation en fonction des caractéristiques électriques demandées. Pour une ligne d'impédance caractéristique $Z_c$ et dont le milieu diélectrique a une constante diélectrique $\varepsilon$ les diamètres D et d seront déterminés à partir de la formule connue

$$\text{Log} \frac{D}{d} = \frac{Z_c \sqrt{\varepsilon}}{138}$$

Bien que les principes de la presente invention aient été décrits ci-dessus en relation avec un exemple particulier de réalisation, il faut comprendre que la description n'a été faite qu'à titre d'exemple et ne limite pas la portée de l'invention. D'autres variantes de réalisation sont en effet possibles et qui consistent, soit à apporter des perfectionnements aux brides 5 et 6 pour permettre leur adaptation sur les prises de connexion des organes électroniques couplés par l'intermédiaire de la ligne coaxiale, soit encore, à modifier la nature du diélectrique compris dans l'espace 20 qui pourra être, suivant les modes d'application, un diélectrique gazeux renfermant par exemple de l'air ou un diélectrique solide constitué également par une matière plastique.

**Revendications**

1. Procédé de fabrication d'une ligne coaxiale constituée par deux conducteurs cylindriques (13, 17), dont l'un est extérieur à l'autre, centrés sur le même axe longitudinal et séparés par un espace (20) rempli d'une substance diélectrique, dans lequel, pour fabriquer le conducteur extérieur de la ligne, on réalise un noyau (1) par électroformage d'un matériau en alliage léger dont les dimensions extérieures correspondent à peu près aux dimensions internes de la ligne coaxiale à réaliser, on dépose par voie électrolytique et successivement sur la surface externe du noyau électroformé (1) une fine couche de laiton puis une fine couche d'argent, pour former une couche métallique (4), on dissout le noyau (1) électroformé et la couche de laiton de la couche métallique (4) de manière à faire apparaître la couche d'argent, caractérisé en ce qu' avant de dissoudre le noyau, on engage chaque extrémité du noyau dans une bride (5, 6) d'extrémité, en rendant solidaire chaque bride (5, 6) du noyau (1) par un dépôt électrolytique d'une fine couche de cuivre (13) au-dessus de la couche d'argent, on enrobe d'une matière plastique le noyau (1) recouvert par la couche de cuivre (13) dans l'espace compris entre la couche de cuivre (13) et les brides (5, 6) et en ce que pour maintenir le conducteur intérieur (17) dans l'axe longitudinal du conducteur extérieur (13), on fixe les extrémités du conducteur intérieur (17) sur les brides d'extrémités (5, 6) par l'intermédiaire de deux rondelles isolantes (18, 19) logées à l'intérieur d'évidements des brides d'extrémités (5, 6).

2. Procédé selon la revendication 1, caractérisé en ce que la matière plastique recouvrant le noyau est en polyuréthane.

3. Procédé selon la revendication 1, caractérisé en ce que la matière plastique (16) recouvrant le noyau est formée par une résine époxy.

4. Procédé selon la revendication 1, caractérisé en ce que le dépôt de la couche de cuivre (13) est effectué sur une épaisseur comprise entre 35 et 40 µm.

5. Procédé selon l'une quelconque des revendications 1 à 4, caractérisé en ce que le noyau (1) électroformé est dissous dans un bain de soude caustique NaOH à 100 g par litre.

6. Procédé selon l'une quelconque des revendications 1 à 4, caractérisé en ce que le noyau (1) électroformé est dissous dans un bain contenant 25 % d'acide nitrique HNO₃ et 75 % d'acide sulfurique H₂SO₄.

**Patentansprüche**

1. Verfahren zur Herstellung einer Koaxialleitung bestehend aus zwei zylindrischen Leitern (13, 17), von denen einer im Verhältnis zum anderen außen liegt, zentriert auf die gleiche Längsachse und getrennt durch einen mit einer dielektrischen Substanz gefüllten Zwischenraum (20), wobei man zur Herstellung des äußeren Leiters der Leitung einen Kern (1) durch Elektroformung eines Materials aus leichter Legierung herstellt, dessen äußere Ausmaße in etwa den inneren Ausmaßen der herzustellenden Koaxialleitung entsprechen, dann elektrolytisch und nacheinander auf die äußere Oberfläche des elektroformierten Kerns (1) eine dünne Schicht aus Messing und dann eine dünne Schicht aus Silber aufbringt, um eine Metallschicht (4) zu bilden, daß man den elektroformierten Kern (1) und die Messingschicht der Metallschicht (4) so auflöst, daß die Silberschicht sichtbar wird, dadurch gekennzeichnet, daß man vor dem Auflösen des Kerns jedes Ende des Kerns in einen Endflansch (5, 6) einführt, indem man jeden Flansch (5, 6) durch elektrolytisches Aufbringen einer dünnen Kupferschicht (13) über der Silberschicht fest mit dem Kern (1) verbindet, daß man den von der Kupferschicht (13) bedeckten Kern (1) in dem Zwischenraum zwischen Kupferschicht (13) und den Flanschen (5, 6) mit einem Kunststoffmaterial umhüllt und daß man die Enden des inneren Leiters (17) auf den Endflanschen (5, 6) über zwei Isolierscheiben (18, 19) befestigt, die in Aushöhlungen der Endflansche (5, 6) angebracht sind, um so den inneren Leiter (17) in der Längsachse des äußeren Leiters (13) zu halten.

2. Verfahren nach Anspruch 1, dadurch gekennzeichnet, daß das den Kern umgebende Kunststoffmaterial Polyurethan ist.

3. Verfahren nach Anspruch 1, dadurch gekennzeichnet, daß das den Kern umgebende Kunststoffmaterial (16) ein Epoxyharz ist.

4. Verfahren nach Anspruch 1, dadurch gekennzeichnet, daß die Kupferschicht (13) in einer Dicke von zwischen 35 und 40 µm aufgebracht wird.

5. Verfahren nach einem beliebigen der Ansprüche 1 bis 4, dadurch gekennzeichnet, daß der elektroformierte Kern (1) in einem Bad aus Natronlauge NaOH einer Konzentration von 100 g pro Liter aufgelöst wird.

6. Verfahren nach einem beliebigen der Ansprüche 1 bis 4, dadurch gekennzeichnet, daß der elektroformierte Kern (1) in einem Bad aufgelöst wird, das 25 % Salpetersäure HNO und 75 % Schwefelsäure H₂SO₄ enthält.

**Claims**

1. A method for manufacturing a coaxial line constituted by two cylindrical conductors (13, 17), one of which is outside the other, centered on a common longitudinal axis and separated by a space (20) filled with a dielectrical substance, wherein, for manufacturing the outer conductor of the line, a core (1) is realized by electroforming of a material of light alloy, the outer dimensions of which correspond more or less to the inner dimensions of the coaxial line to be realized, then a thin layer of brass and then a thin layer of silver are electrolytically and successively deposited on the outer surface of the electroformed core (1), for constituting a metal layer (4), then the electroformed core (1) and the brass layer of the metal layer are dissolved so as to render apparent the silver layer, characterized in that prior to dissolving the core, each end of the core is engaged into an end flange (5, 6) by making each flange (5, 6) integral with the core (1) by means of an electrolytical application of a thin copper layer (13) above the silver layer, then the core (1) covered by the copper layer (13) is envelopped with a plastic material in the interspace between the copper layer and the flanges (5, 6) and in that for maintaining the inner conductor (17) in a coaxial position with respect to the outer conductor (13) the ends of the inner conductor (17) are fixed to the end flanges (5, 6) via two insulating disks (18, 19) located in cavities cut into the end flanges (5, 6).

2. A method according to claim 1, characterized in that the plastic material covering the core is polyurethane.

3. A method according to claim 1, characterized in that the plastic material (16) covering the core is made of an epoxy resin.

4. A method according to claim 1, characterized in that the copper layer (13) has a thickness of between 35 and 40 µm.

5. A method according to any one of claims 1 to 4, characterized in that the electroformed core (1) is dissolved in a bath of caustic soda NaOH of a concentration of 100 g per liter.

6. A method according to any one of claims 1 to 4, characterized in that the electroformed core (1) is dissolved in a bath containing 25 % of nitric acid $HNO_3$ and 75 % sulfuric acid $H_2SO_4$.

Fig.1

Fig.2

Fig.3

Fig.4

Fig.5